# EUROPÄISCHE PATENTANMELDUNG

(11) **EP 1 398 132 A2**
(43) Veröffentlichungstag der Anmeldung: **17.03.2004**
(21) Anmeldenummer: 03019622.4
(22) Anmeldetag: 04.09.2003
(51) Int. Cl.: B29C 44/14

(54) **Bauteil mit aufgebrachtem Dekormaterial**

(30) Priorität: 12.09.2002 DE 10242396
(71) Anmelder: MüllerTech GmbH, 33649 Bielefeld (DE)
(72) Erfinder: Dipl.-Ing Thomas Gregor, 33659 Bielefeld (DE); Dipl.-Ing. Beckmann Andreas, 33611 Bielefeld (DE)
(74) Vertreter: Schirmer, Siegfried, Dipl.-Ing.

(57) **Zusammenfassung**

Durch die Erfindung wird ein Bauteil mit hochwertiger Oberfläche geschaffen, das ohne zusätzliche Maßnahmen den gestellten Anforderungen in optischer, haptischer oder sicherheitstechnischer Hinsicht genügt.

Als Dekormaterial dient erfindungsgemäß Leder oder ein Lederfasermaterial mit mindestens zweifarbig gestalteter Oberfläche, wobei das Leder oder das Lederfasermaterial hinterschäumt sein kann. Es besteht auch die Möglichkeit, auf das Leder oder das Lederfasermaterial ein Werkstoff aufzutragen, der durch chemische oder physikalische Treibmittel aufschäumbar ist.

## Beschreibung

Die Erfindung betrifft ein Bauteil mit mindestens einem auf einer Außenfläche aufgebrachten Dekormaterial.

Bei der Herstellung hochwertiger Oberflächen werden größtenteils Naturprodukte in Form von Holz, Kork u. ä. eingesetzt, die aufgrund ihrer Eigenschaften in Richtung Optik und Haptik individuell gestaltet sein können und durch Oberflächeneffekte und Farbgebung der persönlichen Geschmacksrichtung des Endverbrauchers entsprechen. Dabei unterliegen die verwendeten Werkstoffe einem Eigenschaftsprofil, das teilweise über Verfahrenvarianten und Bearbeitungsmethoden den späteren Gebrauchseigenschaften angepaßt werden muß. Aufgrund der individuellen Grundeigenschaften liegen deshalb oft widersprüchliche Anforderungsprofile vor, wobei dann zwischen den Grundeigenschaften eines Werkstoffes und dem Anforderungsprofil des Fertigproduktes in vielen Fällen Kompromisse erforderlich sind. Bauteile, die besonders hohen Ansprüchen unterliegen, wie dieses z. B. bei Kraftfahrzeugbauteilen für den Innenausbau der Fall ist, werden deshalb mit einem besonders hohen Aufwand hergestellt, um beispielsweise bei Interieurteilen den hohen Sicherheitsanforderungen zu genügen. So werden Bauteile, die im Aufprallbereich liegen, mit besonderen Versteifungselementen ausgestattet und Dekorelemente, wie beispielsweise Zierleisten aus Holz, mehrschichtig aufgebaut und zusätzlich mit einer Metall-/Aluminiumverstärkung versehen. Als Oberflächenschutz werden derartige Bauteile zusätzlich mit einem Schutzlack behandelt. Weichere Produkte, wie beispielsweise Kork, sind wegen der geringen Abriebfestigkeit für derartige Einsatzzwecke nicht geeignet.

Der Erfindung liegt die Aufgabe zugrunde, ein Bauteil mit hochwertiger Oberfläche zu schaffen, das ohne zusätzliche Maßnahmen den gestellten Anforderungen in optischer, haptischer und sicherheitstechnischer Hinsicht genügt.

Diese Aufgabe wird erfindungsgemäß durch die Verwendung von Leder oder einem Lederfasermaterial als Dekormaterial mit mindestens zweifarbig gestalteter Oberfläche gelöst. In Ausgestaltung der Erfindung kann das aus Leder oder das Lederfasermaterial bestehende Dekormaterial hinterschäumt sein oder auf das Leder oder das Lederfasermaterial ein Werkstoff, der durch chemische oder physikalische Treibmittel aufschäumbar ist, aufgetragen werden.

In Ausgestaltung der Erfindung kann das Leder oder das Lederfasermaterial eine holzähnliche oder korkähnliche Oberfläche aufweisen. Darüber hinaus sind erfindungsgemäß eine Vielzahl weiterer Gestaltungsmöglichkeiten in Richtung Marmor sowie weitere Oberflächendekore denkbar, die einen optisch hochwertigen bzw. durch Farbvarianz designmäßig ansprechenden Oberflächeneffekt erzeugen. Das Ledermaterial oder das Lederfasermaterial hat den Vorteil, daß es aufgrund seiner Grundeigenschaften über eine gewisse Elastizität verfügt und somit keine Splitterschutzmaßnahmen, wie bei Echtholz, erforderlich sind. Darüber hinaus kann es vorteilhafterweise verfahrenstechnisch beispielsweise über Kaschiertechnik oder durch Hinterspritz-, Hinterpress- oder Hinterblasverfahren auf verschiedenartige Trägermaterialien aufgebracht werden.

Neben den sicherheitsrelevanten Teilen eignet sich das beschriebene Ledermaterial vorteilhafterweise auch für den Innenausbau von Fahrzeugen, insbesondere für Armaturenbretter, Türverkleidungen und Fahrzeugsitze.

## Patentansprüche

1. Bauteil mit mindestens einem auf einer Außenfläche aufgebrachten Dekormaterial, **gekennzeichnet durch** die Verwendung von Leder oder einem Lederfasermaterial als Dekormaterial mit mindestens zweifarbig gestalteter Oberfläche.

2. Bauteil nach Anspruch 1, **dadurch gekennzeichnet, daß** das aus Leder oder einem Lederfasermaterial bestehende Dekormaterial hinterschäumt ist.

3. Bauteil nach Anspruch 1, **dadurch gekennzeichnet, daß** auf das aus Leder oder einem Lederfasermaterial bestehende Dekormaterial ein Werkstoff, der durch chemische und/oder physikalische Treibmittel aufschäumbar ist, aufgetragen ist.

4. Bauteil nach einem der Ansprüche 1 bis 3, **dadurch gekennzeichnet, daß** das aus Leder oder einem Lederfasermaterial bestehende Dekormaterial durch die Farbgebung eine holzähnliche oder korkähnliche Oberfläche aufweist.

5. Bauteil nach einem der Ansprüche 1 bis 4, **gekennzeichnet durch** die Verwendung im Innenausbau von Fahrzeugen.
